(19) Europäisches Patentamt / European Patent Office / Office européen des brevets

(11) **EP 3 321 711 B1**

(12) **FASCICULE DE BREVET EUROPEEN**

(45) Date de publication et mention de la délivrance du brevet:
**04.08.2021 Bulletin 2021/31**

(51) Int Cl.:
*G01S 7/02* *(2006.01)*      *G01S 7/03* *(2006.01)*
*G01S 13/02* *(2006.01)*      *G01S 7/285* *(2006.01)*

(21) Numéro de dépôt: **17199620.0**

(22) Date de dépôt: **02.11.2017**

(54) **DISPOSITIF DE RECEPTION POUR ANTENNE A BALAYAGE ELECTRONIQUE APTE A FONCTIONNER EN MODE RADAR ET RESM, ET RADAR EQUIPE D'UN TEL DISPOSITIF**

AUFNAHMEVORRICHTUNG FÜR ANTENNE MIT ELEKTRONISCHER STRAHLSCHWENKUNG, DIE IM RESM- UND RADARMODUS ARBEITEN KANN, UND MIT DIESER VORRICHTUNG AUSGESTATTETER RADAR

RECEIVING DEVICE FOR ELECTRONIC SCANNING ANTENNA CAPABLE OF OPERATING IN RADAR AND RESM MODE, AND RADAR PROVIDED WITH SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2016 FR 1601601**

(43) Date de publication de la demande:
**16.05.2018 Bulletin 2018/20**

(73) Titulaire: **Thales**
**92400 Courbevoie (FR)**

(72) Inventeurs:
• **CORNIC, Pascal**
**29238 Brest cedex 3 (FR)**
• **GARREC, Patrick**
**33610 Pessac (FR)**
• **MONTIGNY, Richard**
**33610 Pessac (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 182 375      FR-A1- 2 972 808**
**FR-A1- 2 988 858      GB-A- 2 250 152**

• A.G Huizing ET AL: "Compact Scalable Multifunction RF Payload for UAVs with FMCW Radar and ESM Functionality", , 1 janvier 2009 (2009-01-01), XP055385065, Extrait de l'Internet: URL:http://publications.tno.nl/publication /106393/ObrVx9/huizing-2009-compact.pdf
• STEPHANE KEMKEMIAN ET AL: "Toward common radar & EW multifunction active arrays", PHASED ARRAY SYSTEMS AND TECHNOLOGY (ARRAY), 2010 IEEE INTERNATIONAL SYMPOSIUM ON, IEEE, PISCATAWAY, NJ, USA, 12 octobre 2010 (2010-10-12), pages 777-784, XP031828584, ISBN: 978-1-4244-5127-2

**Description**

La présente invention concerne un dispositif de réception pour antenne à balayage électronique apte à fonctionner en mode radar et en mode RESM. Il concerne également un radar équipé d'un tel dispositif.

Un problème technique à résoudre pour un tel radar à antenne active est de le doter de moyens d'écoute passive de type RESM, fonctionnant dans la bande d'émission du radar sans augmenter le volume de l'électronique, en particulier en utilisant le même récepteur pour assurer les fonctions radars et ESM de façon simultanée ou séquentielle.

Le même problème peut se poser dans le domaine des émetteurs et récepteurs de communication pour réaliser une fonction CESM. Actuellement, les équipements radars et RESM sont séparés. Il est parfois possible de partager les mêmes antennes pour réaliser deux fonctions mais cela est possible avec :

- des moyens de réception différents ;
- ou un partage du temps entre les deux fonctions ce qui induit une perte d'efficacité de chacune des fonctions, radar ou ESM, en particulier pour ce qui concerne la probabilité d'interception.

Dans ces deux cas, le coût global est important et l'intégration des deux équipements, radar et ESM, peut être difficile, en particulier pour une application aéroportée, sur un hélicoptère ou sur un drone.

Par ailleurs, le récepteur RESM ne peut écouter pendant l'émission du radar, car il se trouverait saturé par celui-ci.

Un document FR 2 988 858 A1 divulgue un dispositif de détection électromagnétique.

Un but de l'invention est de résoudre le problème précité, en permettant notamment le traitement simultané de signaux radar et ESM. A cet effet, l'invention a pour objet un dispositif de réception pour radar à antenne réseau à balayage électronique, comportant un filtre de réception analogique,
ledit dispositif comportant en outre un filtrage numérique apte à séparer de façon fréquentielle les signaux reçus, ledit filtre de réception analogique étant adapté à la bande de fonctionnement totale du radar, ledit filtrage numérique comportant un filtrage numérique adapté à la bande de fréquence instantanée de la fonction de réception et un filtrage numérique couvrant le reste disponible de ladite bande de fréquence totale, une partie de la bande de fréquence de ladite bande de fréquence totale étant allouée à la fonction de réception radar et le reste de la bande disponible étant allouée à une fonction de réception RESM.

Dans un mode de réalisation possible, ladite antenne étant découpée en sous-réseaux, il comporte plusieurs voies de réception, chacune desdites voies de réception étant associée à un sous-réseau de ladite antenne.

Lesdites voies de réception sont par exemple combinées pour former des faisceaux d'antenne de réception indépendants dans la fonction radar et dans la fonction RESM. Lesdits faisceaux formés dans la fonction radar et dans la fonction RESM sont par exemple identiques et pointent dans une même direction.

La fonction de réception RESM est par exemple effectuée simultanément dans des polarisations différentes sur différents sous-réseaux de ladite antenne.

Différents sous-réseaux de ladite antenne sont par exemple affectés à des sous-bandes de fréquence différentes de la fonction de réception RESM.

Au moins un sous-réseau de ladite antenne est par exemple apte à être désactivé en réception pour élargir le domaine de couverture instantanée de la fonction de réception RESM, ledit au moins sous-réseau étant désactivé par désactivation de la voie de réception qui lui est associée.

L'antenne réseau étant constituée d'éléments rayonnants associés à des modules actifs, les modules actifs de plusieurs sous-réseaux de ladite antenne sont par exemple aptes à être désactivés en réception pour permettre la création d'une base d'interférométrie pour mesurer les directions d'arrivée des signaux dans la fonction de réception RESM, un sous-réseau étant désactivé par désactivation de la voie de réception qui lui est associée.

Les éléments rayonnant des sous-réseaux associés à des modules restant actifs sont par exemple regroupés par colonnes et ou par lignes.

Dans un mode de réalisation possible, dans chaque voie de réception associée à un sous-réseau de ladite antenne, ledit dispositif comporte au moins :

- dans le domaine analogique, un amplificateur faible bruit, un filtre adapté à ladite bande de fréquence donnée, un convertisseur analogique-numérique ;

- dans le domaine numérique, un filtre numérique adapté à la bande de fréquence instantanée de la fonction de réception et un filtre numérique couvrant le reste disponible de ladite bande de fréquence donnée, les signaux d'entrée desdits filtres numériques étant issus de la sortie dudit convertisseur analogique-numérique.

Ledit dispositif comporte par exemple pour chaque voie de réception des circuits de transposition de fréquence des signaux reçus en amont du circuit de conversion analogique.

Chaque voie de réception analogique est par exemple intégrée dans un module comportant en outre une voie d'émission également associée audit sous-réseau.

Lesdits filtres numériques sont par exemple réalisés par les moyens de traitement dudit radar.

La fonction de réception radar et la fonction de réception RESM peuvent être réalisées simultanément.

L'invention a également pour objet un radar équipé d'un dispositif tel que précédemment décrit.

D'autres caractéristiques et avantages de l'invention apparaîtront à l'aide de la description qui suit, faite en regard de dessins annexés qui représentent :

- La figure 1, de façon simplifiée, une antenne réseau associée à des modules actifs ;
- La figure 2, un module actif apte à être couplé à un élément rayonnant, ou un sous-réseau, d'une antenne réseau à balayage électronique ;
- La figure 3, une antenne réseau divisée en N sous-réseaux, N étant égal à 8 ;
- La figure 4, un système d'émission et de réception apte à être couplé à ladite antenne réseau ou à un sous-réseau de celle-ci ;
- La figure 5, une illustration du principe de réalisation d'un dispositif de réception selon l'invention ;
- La figure 6, les sous-réseaux de l'exemple de la figure 3 couplés à un dispositif de réception selon l'invention ;
- La figure 7, un exemple de configuration d'activation des sous-réseaux de ladite antenne.

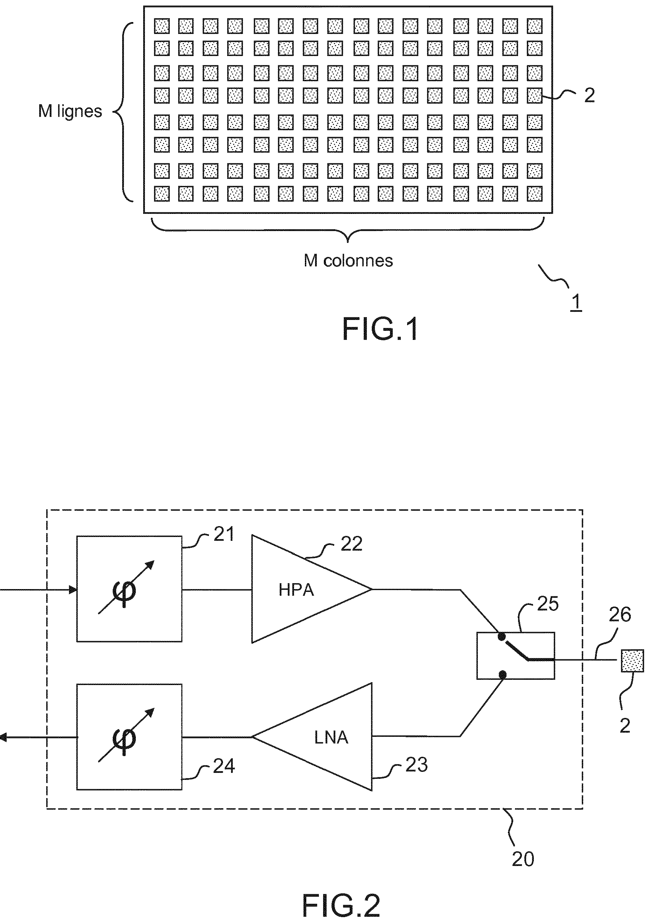

La figure 1 présente de façon simplifiée une antenne réseau 1 à modules actifs, à balayage électronique comportant M lignes et N colonnes d'éléments rayonnants 2. En règle générale, M et N sont relativement grands, ce qui correspond à une antenne directive.

On considérera par la suite un radar équipée de ce type d'antenne.

Dans une telle antenne, selon le domaine de couverture angulaire recherché, les éléments rayonnants sont reliés soit individuellement, soit par regroupement, à un module actif réalisant la fonction émission et la fonction réception avec le déphasage associé permettant de dépointer le faisceau d'antenne à l'émission et à la réception.

La figure 2 présente, sous forme simplifiée, un module actif couplé à un élément rayonnant 2 de l'antenne. Le module comporte une voie d'émission comprenant au moins un déphaseur 21 et un amplificateur de puissance 22 amplifiant le signal d'entrée. La voie de réception comporte un amplificateur faible bruit 23 et un déphaseur 24. Un dispositif de commutation 25 permet de commuter la voie d'émission ou la voie de réception vers l'entrée/sortie 26 du module relié à l'élément rayonnant 2. Ce dispositif est par exemple un circulateur hyperfréquence guidant les ondes de la voie d'émission vers l'entrée/sortie 26 et guidant en réception les ondes entrantes de l'entrée/sortie 26 vers la voie de réception.

Les différents modules 20, composant le système d'émission et de réception, sont contrôlés à l'aide d'un bus de données numériques, non représenté, permettant notamment de façon connue l'activation de la voie d'émission et de la voie réception, la gestion du gain des amplificateurs et le déphasage à l'émission et à la réception.

En réception, les différentes voies issues des modules actifs sont de façon classique sommées dans le domaine analogique, généralement en fréquence intermédiaire, décalée par rapport à la fréquence d'émission, pour former plusieurs voies de réception qui sont ensuite numérisées et traitées dans un récepteur numérique.

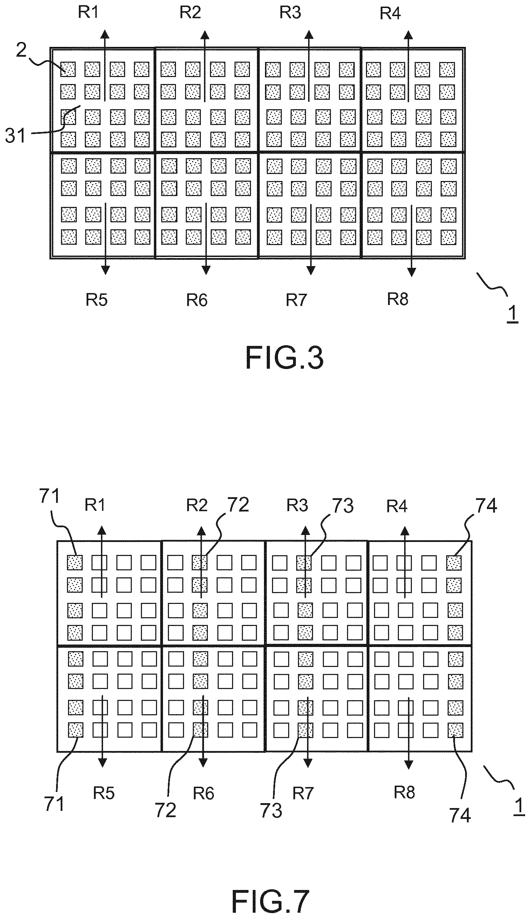

La figure 3 illustre ce principe de réception pour une antenne comportant 8 voies de réception R1, R2, R3, R4, R5, R6, R7, R8 associées à 8 sous-réseaux antennaires identiques 31. Dans cet exemple de réalisation un module actif 20 est relié à tous les éléments 2 d'un sous-réseau. Les signaux en réception sont regroupés en sortie des modules actifs par sommation analogique sur chaque sous-réseau, conduisant à 8 voies de réception analogique dans le cas de la figure 3, correspondant aux 8 sous-réseaux antennaires. En d'autres termes, la formation de faisceaux en réception est réalisée pour partie en analogique et pour partie en numérique. Le système d'émission et de réception comporte alors 128 modules actifs. En conformité avec le principe ci-dessus, les signaux de sorties de 8 voies de réception R1, R2, R3, R4, R5, R6, R7, R8 sont sommés.

De façon classique, la largeur de bande d'un récepteur radar en fréquence intermédiaire est adaptée à la largeur de bande instantané ΔF des impulsions radar, en correspondance avec la résolution distance recherchée. Cela est particulièrement le cas pour les radars à impulsions, à compression d'impulsion ou non.

Par exemple, pour une résolution distance Δr égale à 1 mètre, la bande passante $Bp$ vaut:

$$Bp = \Delta F = \frac{c}{2\Delta r} \ ,$$

soit 150 MHz

Dans le cas particulier où la technique dite de « deramping » (correspondant à la démodulation d'une rampe de fréquence par une autre rampe) est utilisée en réception (ce qui est le cas des radars FMCW), la bande passante est encore plus faible, car elle est limitée par la portée instrumentée maximum du radar $Dmax$, soit :

$$Bp = \frac{\Delta F}{T} 2Dmax/C,$$

où T est la durée de l'impulsion radar.

Il en résulte que la bande de réception instantanée d'un récepteur radar est souvent beaucoup plus faible que la bande de fonctionnement potentielle de ce radar.

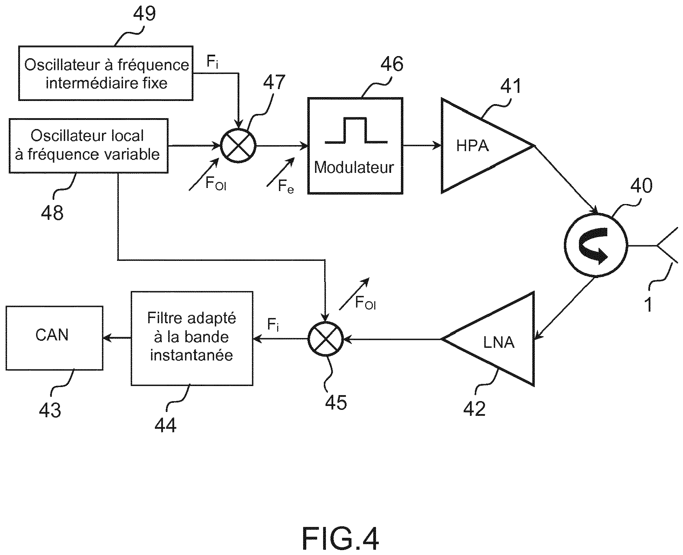

La figure 4 illustre une solution conventionnelle d'un radar, le signal reçu est transposé à une fréquence intermédiaire fixe avant d'être filtré dans un filtre analogique adapté à la bande de réception instantanée, puis numérisé.

Dans un tel schéma le signal reçu est démodulé par un signal d'oscillateur local dont la fréquence est asservie à la fréquence d'émission. La figure 4 présente un exemple de réalisation dans le cas d'une voie de réception unique.

Le système d'émission et de réception est relié à l'antenne 1 par un circulateur hyperfréquence 40 (ou par un commutateur émission/réception). La forme d'onde d'émission, variable, est générée par :

- un générateur de forme d'onde fixe à la fréquence intermédiaire, plus particulièrement par un oscillateur 49 à fréquence fixe égale à la fréquence intermédiaire Fi utilisée en réception ;
- et un générateur de forme d'onde à fréquence variable, plus particulièrement par un oscillateur 48 à fréquence variable Foi.

La forme d'onde d'émission Fe est obtenue par la combinaison de ces deux formes d'onde Fi, Foi au moyen d'un mélangeur 47. L'onde Fe est ensuite classiquement modulée par un modulateur 46, appliquant par exemple un déphasage. Un modulateur non représenté effectue par exemple un déphasage en réception comme le circuit 24 de la figure 2.

Enfin le signal est amplifié par un amplificateur de puissance 41 avant d'être transmis à l'antenne 1 via le circulateur 40.

La voie de réception comporte un amplificateur faible bruit 42 en sortie du circulateur 40, recevant ainsi les signaux reçus par l'antenne. Le signal de réception en sortie du modulateur est transposé à la fréquence intermédiaire Fi au moyen d'un deuxième mélangeur 45. Ce dernier reconstitue la fréquence intermédiaire à partir de la forme d'onde d'émission Fi + Foi contenue dans le signal de réception et de la forme du signal variable Foi transmis par l'oscillateur 48 à fréquence variable. En sortie du mélangeur, le signal de réception transposé à la fréquence intermédiaire est filtré par un filtre 44 adapté à la bande d'émission instantanée du radar. Le signal filtré est ensuite converti dans domaine numérique par un convertisseur analogique-numérique 43.

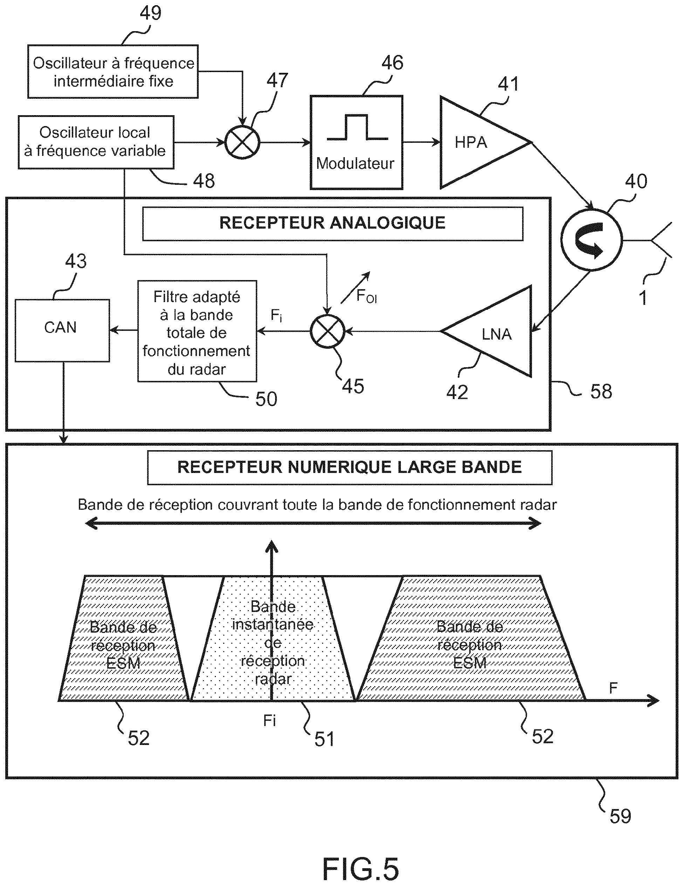

La figure 5 illustre le principe de réalisation d'un dispositif selon l'invention, présenté à titre d'exemple dans un cas d'application à une seule voie de réception. Pour montrer l'apport de l'invention, on reprend l'exemple de la figure 4 modifié par l'invention.

L'invention exploite judicieusement le fait que la bande de réception instantanée d'un récepteur radar est généralement plus faible que la bande de fonctionnement potentielle de ce radar. Ainsi, l'invention consiste :

- en premier lieu à remplacer le filtre adapté de réception 44 par un filtre 50 dont la bande passante est égale à la bande de fonctionnement totale du radar, puis à numériser le signal sur l'ensemble de cette bande et ;
- en deuxième lieu à réaliser dans le domaine numérique un premier filtre 51 adapté à la bande de fréquence instantanée du radar et un second filtre 52 couvrant le reste de la bande disponible pour la réception des signaux ESM.

En partant du système d'émission et de réception de la figure 4, la voie d'émission reste inchangée. Elle est toujours reliée à l'antenne 1 via le circulateur hyperfréquence 40. La voie de réception est la même à l'exception du filtre 50 qui est maintenant adapté à la bande totale de fonctionnement du radar. Cette voie de réception analogique 58 est complétée par une voie de réception numérique 59 composée du filtre numérique 51 adapté à la bande instantanée du radar et un filtre numérique 52 couvrant le reste de la bande totale de fonctionnement affecté à la réception des signaux ESM. Le convertisseur analogique-numérique 43 fait la jonction entre la voie analogique 58 et la voie numérique 59, le signal de réception numérisé étant le signal d'entrée de la voie numérique.

Les positions et les largeurs des filtres 58, 59 sont modifiées de façon dynamique en fonction du contexte. En d'autres termes, la voie de réception numérique, à large bande de fréquence, réalise de façon dynamique par filtrage numérique une séparation fréquentielle des signaux reçus, une partie limitée de la bande de fréquence étant allouée à la réception de la fonction radar et une autre partie de la bande étant allouée à une réception RESM, selon le contexte de mission.

Typiquement, pour un radar fonctionnant en bande X sur une bande possible de 2 GHz, si la résolution distance est de 1 mètre, on peut allouer une bande de fréquence instantanée de 150 MHz à la réception radar, et 1850 MHz à la fonction ESM. Les deux fonctions, radar et ESM, sont ainsi réalisables de façon simultanée.

Selon le contexte et les besoins opérationnels, le radar ou l'ESM peuvent alternativement être l'un ou l'autre maître du plan de fréquence. Une fonction, radar ou ESM, est maître du plan de fréquence signifie que la position et la largeur de bande de la fonction impose la position et la largeur de bande de l'autre fonction.

Il est bien sûr toujours possible de désactiver la fonction radar ou la fonction ESM.

Dans le cas où le mode radar est désactivé, la fonction ESM dispose de l'ensemble de la bande de réception.

Dans le cas d'une antenne active à balayage électronique, le principe de réalisation décrit à la figure 5 se décline sur chacune des voies de réception en parallèle.

Il est alors possible de réaliser simultanément par formation de faisceau par le calcul des faisceaux différents ou identiques dans les bandes de réception radar ou ESM.

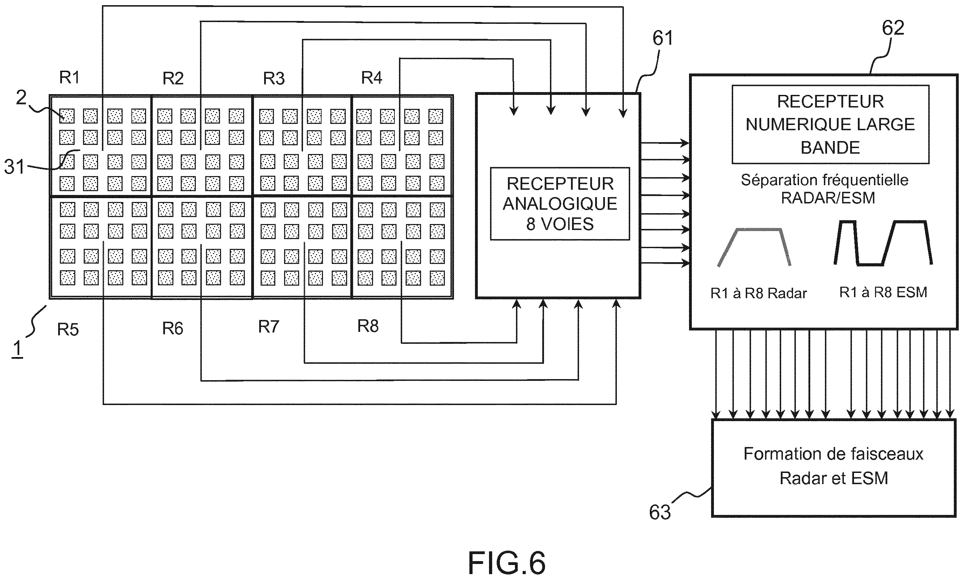

La figure 6 présente un exemple de réalisation d'un dispositif de réception selon l'invention comportant 8 voies de réception associées à 8 sous-réseaux antennaires 31 constituant l'antenne 1, du type de la figure 3.

On représente sur la figure 6 uniquement la partie réception du système d'émission et de réception, la partie émission étant inchangée par rapport à l'art antérieur, une voie d'émission étant associée à chaque sous-réseau antennaire.

Un récepteur analogique 61 comporte 8 voies de réception analogique du type de celle 58 de la figure 5, comportant chacune au moins un amplificateur faible bruit, d'un filtre adapté à la bande de fréquence totale de fonctionnement du radar et d'un convertisseur analogique numérique.

Le récepteur analogique 61 délivre 8 signaux de réception analogique qui sont les données d'entrée d'un récepteur numérique large bande 62 composé de 8 voies de réception numérique du type de celle 59 de la figure 5.

Chaque voie numérique comporte un filtre numérique adapté à la bande instantanée de réception radar et un filtre numérique couvrant le reste de la bande de fonctionnement totale affectée à la fonction ESM.

Le récepteur numérique 62 comporte 2x8 sorties, 8 sorties correspondant aux sorties des 8 filtres affectés à la fonction radar, correspondant chacune à l'une des 8 sous-réseaux antennaires R1, R2, R3, R4, R5, R6, R7, R8 et 8 sorties correspondant aux sorties des 8 filtres affectés à la fonction ESM, correspondant chacune à l'une des 8 sous-réseaux antennaires R1, R2, R3, R4, R5, R6, R7, R8.

L'exemple de la figure 6 comporte 8 sous-réseaux antennaires. L'invention s'applique pour un nombre N quelconque de sous-réseaux, les récepteurs analogique et numérique comportant alors N voie de réception.

Chaque voie d'émission et chaque voie de réception analogique peuvent être réalisées en utilisant un module actif du type de celui de la figure 2. Dans ce cas un module actif est associé à chaque réseau antennaire, comme décrit relativement à la figure 3. Chaque module actif est complété par un dispositif de transposition de fréquence, en cas de passage par une fréquence intermédiaire en réception, par un filtre adapté à la bande totale de fonctionnement du radar et par un convertisseur analogique numérique. Il est possible également de prévoir un module actif comportant l'ensemble de ces fonctions, c'est-à-dire l'ensemble des fonctions décrites par exemple à la figure 5, le filtre adapté à la bande instantanée de réception radar étant alors remplacé par un filtre large bande adapté à la bande de fonctionnement totale.

Le récepteur numérique peut être avantageusement intégré dans les moyens de traitement du radar. L'architecture matérielle du système d'émission et de réception du radar est ainsi peu ou pas modifiée par rapport à un système classique. Le volume de l'électronique du radar n'est donc pas augmenté.

Le récepteur numérique 62 est suivi par une unité de formation de faisceaux par le calcul 3, pour les fonctions radar et ESM, ces faisceaux étant formés respectivement à partir des sorties des filtres radar 51 et des filtres ESM 52. Cette formation de faisceaux est par exemple réalisée par les moyens de traitement du radar. Ces derniers peuvent avantageusement générer des faisceaux d'antenne de réception de façon indépendante en mode radar et en mode ESM selon le contexte.

En général, à un instant donné, tous les sous-réseaux antennaires sont déphasés au niveau de leurs modules actifs pour pointer dans la même direction ($\theta_{el}$, $\theta_{az}$) ce qui se traduit par des diagrammes d'antennes tous identiques, d'ouverture à 3 dB : $\theta_{3dBel}$ et $\theta_{3dBaz}$, $\theta_{el}$ et $\theta_{az}$ étant les angles d'élévation et d'azimut, $\theta_{3dBel}$ et $\theta_{3dBaz}$ étant les angles d'ouverture à 3 dB en élévation et en azimut.

Après séparation dans le domaine spectral, il est possible de former à loisir et séparément sur les voies de réception radar et ESM de nouveaux faisceaux obtenus à partir de combinaisons linéaires des N voies de réception

De nombreuses combinaisons sont possibles, selon le contexte et la mission à réaliser :

- On peut réaliser la focalisation des faisceaux radar et des faisceaux ESM dans la même direction et selon le même diagramme antennaire. On peut par exemple simplement en faisant la somme directe des signaux reçus sur les N voies former un faisceau très directif dans cette direction pour profiter d'un maximum de sensibilité. On peut également créer des voies de type différence monopulse pour obtenir une direction d'arrivée très précise des signaux radar et ESM ;

- On peut réaliser la focalisation des faisceaux radar et des faisceaux ESM dans la même direction, mais avec des ouvertures différenciées. On peut par exemple réaliser des faisceaux très directifs en radar et moins directifs en ESM de façon à permettre une couverture angulaire plus importante dans ce mode. Il est également possible dans cette configuration de répartir sur les différents faisceaux ESM des sous-bandes de fréquence différentes pour augmenter la probabilité d'interception ou diminuer le volume global de calcul ;

- On peut, si l'antenne est à polarisation multiple, recevoir simultanément sur différents sous-réseaux de l'antenne les signaux ESM dans différentes polarisations afin d'estimer cette polarisation qui représente un paramètre discriminant important ;

- Lorsque les fonctionnements radar et ESM sont séquentiels, il est possible de réaliser une fonction ESM sur une ouverture angulaire très large, en limitant la réception à quelques lignes ou quelques colonnes de modules actifs, l'ensemble des éléments rayonnants activés formant une base d'interférométrie destinée à estimer la direction d'arrivée dans un large champ.

La figure 7 présente cette dernière configuration où seulement quatre colonnes 71, 72, 73, 74 d'éléments rayonnants de l'antenne réseau 1 sont activés en réception, les voies de réception des autres éléments étant désactivées. Dans cette figure 7, cette configuration est illustrée sur l'exemple d'antenne à 8 sous-réseaux des figures 3 et 6.

Dans l'exemple de configuration de la figure 7, les éléments rayonnants actifs sont regroupés par colonnes, il est bien sûr possible de les regrouper par lignes. On peut élargir le domaine de couverture instantanée de l'antenne sans faire de tels regroupements, en désactivant simplement plusieurs sous-réseaux en réception. Un sous-réseau est désactivé en réception en désactivant sa voie de réception associée. La désactivation d'une voie de réception est simplement réalisée, de façon connue, en inhibant la réception des signaux vers ladite voie, par commande du circulateur 40 par exemple.

L'invention permet avantageusement d'intégrer, dans un radar à antenne active comprenant plusieurs voies de réception, un récepteur numérique multivoies à large bande pour assurer à la fois les fonctions de détection radar et ESM de façon simultanée ou séquentielle sans augmenter le volume de l'électronique du radar, et sans dégrader les performances de détection de l'une ou de l'autre des fonctions.

L'invention a également d'autres avantages.

Le récepteur RESM peut fonctionner pendant l'émission du radar.

Les domaines de couverture angulaire et les directions de visée du radar et de l'ESM peuvent être identiques ou différenciés, et gérés de façon dynamique en automatique.

Les fréquences de réception des deux fonctions peuvent être gérées automatiquement de façon à optimiser la probabilité d'interception de chacune des fonctions.

La sensibilité de la fonction RESM est extrêmement élevée, car elle bénéficie du gain d'antenne réseau élevé du radar. Pour les mêmes raisons, l'estimation de la direction d'arrivée en mode RESM est extrêmement précise.

Il est possible en pointant l'antenne radar dans la direction d'une cible, de recevoir les émissions du radar émis par cette cible, pour obtenir une classification, voire une identification de celle-ci, en associant la signature du radar équipant la cible, à la signature électromagnétique de cette cible. Dans le cas où l'antenne radar est à multiple polarisation, il est possible en mode ESM de recevoir dans une même direction et simultanément dans différentes polarisations, ce qui permet d'identifier sans ambiguïté la polarisation de l'émetteur.

Dans le cas d'une antenne à balayage électronique 2D, le RESM est capable de mesurer la direction d'arrivée de l'émetteur en 2D.

Enfin, l'invention est facile à mettre en œuvre à partir des moyens de traitement numérique selon l'état de l'art.

## Revendications

1.  Dispositif de réception pour radar à antenne réseau à balayage électronique, comportant un filtre de réception analogique (50), ledit dispositif comportant en outre un filtrage numérique (51, 52) apte à séparer de façon fréquentielle les signaux reçus, **caractérisé en ce que** ledit filtre de réception analogique (50) étant adapté à la bande de fonctionnement totale du radar, ledit filtrage numérique comportant un filtrage numérique (51) adapté à la bande de fréquence instantanée de la fonction de réception et un filtrage numérique (52) couvrant le reste disponible de ladite bande de fréquence totale, une partie de la bande de fréquence de ladite bande de fréquence totale est allouée à la fonction de réception radar et le reste disponible est alloué à une fonction de réception RESM.

2.  Dispositif selon la revendication 1, **caractérisé en ce que** ladite antenne étant découpée en sous-réseaux, il comporte plusieurs voies de réception, chacune desdites voies de réception étant associée à un sous-réseau (31) de ladite antenne.

3.  Dispositif selon l'une quelconque des revendications précédentes, **caractérisé en ce que** lesdites voies de réception sont combinées pour former des faisceaux d'antenne de réception indépendants dans la fonction radar et dans la fonction RESM.

4.  Dispositif selon la revendication 3, **caractérisé en ce que** lesdits faisceaux formés dans la fonction radar et dans la fonction RESM sont identiques et pointent dans une même direction.

5.  Dispositif selon l'une quelconque des revendications précédentes, **caractérisé en ce que** la fonction de réception RESM est effectuée simultanément dans des polarisations différentes sur différents sous-réseaux de ladite antenne.

6.  Dispositif selon l'une quelconque des revendications 2 à 5, **caractérisé en ce que** différents sous-réseaux de ladite antenne sont affectés à des sous-bandes de fréquence différentes de la fonction de réception RESM.

7.  Dispositif selon l'une quelconque des revendications 2 à 6, **caractérisé en ce qu'**au moins un sous-réseau de ladite antenne est apte à être désactivé en réception pour élargir le domaine de couverture instantanée de la fonction de réception RESM, ledit au moins un sous-réseau étant désactivé par désactivation de la voie de réception qui lui est associée.

8.  Dispositif selon l'une quelconque des revendications 2 à 7, **caractérisé en ce que** l'antenne réseau étant constituée d'éléments rayonnants (2) associés à des modules actifs, les modules actifs de plusieurs sous-réseaux de ladite antenne sont aptes à être désactivés en réception pour permettre la création d'une base d'interférométrie pour mesurer les directions d'arrivée des signaux dans la fonction de réception RESM, un sous-réseau étant désactivé par désactivation de la voie de réception qui lui est associée.

9. Dispositif selon l'une quelconque des revendications 7 ou 8, **caractérisé en ce que** les éléments rayonnants (2) des sous-réseaux associés à des modules restant actifs sont regroupés par colonnes (71, 72, 73, 74) et ou par lignes.

10. Dispositif selon l'une quelconque des revendications 2 à 9, **caractérisé en ce que** dans chaque voie de réception associée à un sous-réseau de ladite antenne, il comporte au moins :

     - dans le domaine analogique, un amplificateur faible bruit (58), un filtre (50) adapté à ladite bande de fréquence donnée, un convertisseur analogique-numérique (43) ;
     - dans le domaine numérique, un filtre numérique (51) adapté à la bande de fréquence instantanée de la fonction de réception et un filtre numérique (52) couvrant le reste disponible de ladite bande de fréquence donnée, les signaux d'entrée desdits filtres numériques étant issus de la sortie dudit convertisseur analogique-numérique.

11. Dispositif selon la revendication 10, **caractérisé en ce qu'**il comporte pour chaque voie de réception des circuits (45, 48, 49) de transposition de fréquence des signaux reçus en amont du circuit de conversion analogique.

12. Dispositif selon l'une quelconque des revendications 10 ou 11, **caractérisé en ce que** chaque voie de réception analogique est intégrée dans un module (20) comportant en outre une voie d'émission également associée audit sous-réseau.

13. Dispositif selon l'une quelconque des revendications 10 à 12, **caractérisé en ce que** lesdits filtres numériques (51, 52) sont réalisés par les moyens de traitement dudit radar.

14. Dispositif selon l'une quelconque des revendications précédentes, **caractérisé en ce que** la fonction de réception radar et la fonction de réception RESM sont aptes à être réalisées simultanément.

15. Radar, **caractérisé en ce qu'**il comporte un dispositif de réception selon l'une quelconque des revendications précédentes.

**Patentansprüche**

1. Aufnahmevorrichtung für Radar mit einer Netzwerkantenne mit elektronischer Abtastung, umfassend einen analogen Empfangsfilter (50), wobei die Vorrichtung ferner eine digitale Filterung (51, 52) umfasst, welche in der Lage ist, die empfangenen Signale nach Frequenzen zu trennen, **dadurch gekennzeichnet, dass** der analoge Empfangsfilter (50) an das Gesamt-Betriebsband des Radars angepasst ist, wobei die digitale Filterung eine digitale Filterung (51) umfasst, welche an das augenblickliche Frequenzband der Empfangsfunktion angepasst ist, und eine digitale Filterung (52), welche den verfügbaren Rest des Gesamt-Frequenzbandes abdeckt, wobei ein Teil des Frequenzbandes des Gesamt-Frequenzbandes der Radar-Empfangsfunktion zugewiesen ist und der verfügbaren Rest einer RESM-Empfangsfunktion zugewiesen ist.

2. Vorrichtung nach Anspruch 1, **dadurch gekennzeichnet, dass** diese, da die Antenne in Teilnetzwerke unterteilt ist, mehrere Empfangskanäle umfasst, wobei jeder der Empfangskanäle einem Teilnetzwerk (31) der Antenne zugeordnet ist.

3. Vorrichtung nach einem der vorhergehenden Ansprüche, **dadurch gekennzeichnet, dass** die Empfangskanäle kombiniert sind, um unabhängige Empfangsantennen-Strahlen in der Radarfunktion und in der RESM-Funktion zu bilden.

4. Vorrichtung nach Anspruch 3, **dadurch gekennzeichnet, dass** die in der Radarfunktion und in der RESM-Funktion gebildeten Strahlen identisch sind und in eine gleiche Richtung weisen.

5. Vorrichtung nach einem der vorhergehenden Ansprüche, **dadurch gekennzeichnet, dass** die RESM-Empfangsfunktion gleichzeitig in unterschiedlichen Polarisationen an unterschiedlichen Teilnetzwerken der Antenne ausgeführt wird.

6. Vorrichtung nach einem der Ansprüche 2 bis 5, **dadurch gekennzeichnet, dass** unterschiedliche Teilnetzwerke der Antenne unterschiedlichen Frequenzteilbändern der RESM-Empfangsfunktion zugeordnet sind.

7. Vorrichtung nach einem der Ansprüche 2 bis 6, **dadurch gekennzeichnet, dass** mindestens ein Teilnetzwerk der Antenne in der Lage ist, im Empfang deaktiviert zu werden, um den augenblicklichen Deckungsbereich der RESM-Empfangsfunktion zu erweitern, wobei das mindestens eine Teilnetzwerk durch Deaktivierung des ihm zugeordneten Empfangskanals deaktiviert wird.

**8.** Vorrichtung nach einem der Ansprüche 2 bis 7, **dadurch gekennzeichnet, dass** indem die Netzwerkantenne aus Abstrahlelementen (2) gebildet ist, welche aktiven Modulen zugeordnet sind, die aktiven Module mehrerer Teilnetzwerke der Antenne in der Lage sind, im Empfang deaktiviert zu werden, um die Schaffung einer Interferometriebasis zu ermöglichen, um die Ankunftsrichtungen der Signale in der RESM-Empfangsfunktion zu messen, wobei ein Teilnetzwerk durch Deaktivierung des ihm zugeordneten Empfangskanals deaktiviert ist.

**9.** Vorrichtung nach einem der Ansprüche 7 oder 8, **dadurch gekennzeichnet, dass** die Strahlelemente (2) der den aktiv bleibenden Modulen zugeordneten Teilnetzwerke zu Spalten (71, 72, 73, 74) oder zu Zeilen zusammengefasst sind.

**10.** Vorrichtung nach einem der Ansprüche 2 bis 9, **dadurch gekennzeichnet, dass** diese in jedem einem Teilnetzwerk der Antenne zugeordneten Empfangskanal mindestens Folgendes umfasst:

- im Analogbereich, einen rauscharmen Verstärker (58), einen Filter (50), der an das gegebene Frequenzband angepasst ist und einen Analog-Digital-Umwandler (43);
- im Digitalbereich, einen digitalen Filter (51), der an das augenblickliche Frequenzband der Empfangsfunktion angepasst ist und einen digitalen Filter (52), welcher den verfügbaren Rest des gegebenen Frequenzbandes abdeckt, wobei die Eingangssignale der digitalen Filter aus dem Ausgang des Analog-Digital-Umwandlers stammen.

**11.** Vorrichtung nach Anspruch 10, **dadurch gekennzeichnet, dass** diese für jeden Empfangskanal Schaltungen (45, 48, 49) zur Frequenzumsetzung der empfangenen Signale stromaufwärts der Analog-Umwandlungs-Schaltung umfasst.

**12.** Vorrichtung nach einem der Ansprüche 10 oder 11, **dadurch gekennzeichnet, dass** jeder analoge Empfangskanal in ein Modul (20) integriert ist, welches ferner einen Sendekanal umfasst, welcher ebenfalls dem Teilnetzwerk zugeordnet ist.

**13.** Vorrichtung nach einem der Ansprüche 10 bis 12, **dadurch gekennzeichnet, dass** die digitalen Filter (51, 52) durch die Verarbeitungsmittel des Radars gebildet werden.

**14.** Vorrichtung nach einem der vorhergehenden Ansprüche, **dadurch gekennzeichnet, dass** die Radarempfangsfunktion und die RESM-Empfangsfunktion in der Lage sind, gleichzeitig ausgeführt zu werden.

**15.** Radar, **dadurch gekennzeichnet, dass** dieser eine Empfangsvorrichtung nach einem der vorhergehenden Ansprüche umfasst.

**Claims**

**1.** Receiving device for an electronically scanned antenna array radar, comprising an analogue reception filter (50), said device furthermore comprising digital filtering (51, 52) able to separate the received signals depending on their frequency, **characterized in that** said analogue reception filter (50) is adapted to the entire operating band of said radar, said digital filtering comprising a digital filtering (51) adapted to the instantaneous frequency band of the reception function and a digital filtering (52) covering the available remainder of said entire frequency band, one portion of the frequency band of said entire frequency band being allocated to the radar reception function and the available being allocated to an RESM reception function.

**2.** Device according to claim 1, **characterized in that**, said antenna being divided into sub-arrays, it includes several reception channels, each of said reception channels being associated with one sub-array (31) of said antenna.

**3.** Device according to any one of the preceding claims, **characterized in that** said reception channels are combined to form independent reception antenna beams in the radar function and RESM function.

**4.** Device according to claim 3, **characterized in that** said beams formed in the radar function and in the RESM function are identical and point in a same direction.

**5.** Device according to any one of the preceding claims, **characterized in that** the RESM reception function is simultaneously provided in different polarizations on various sub-arrays of said antenna.

**6.** Device according to any one of Claims 2 to 5, **characterized in that** various sub-arrays of said antenna are assigned to different frequency sub-bands of the RESM reception function.

**7.** Device according to any one of Claims 2 to 6, **characterized in that** at least one sub-array of said antenna is able to be deactivated receptionwise in order to widen the instantaneous field of coverage of the RESM reception function, said at least one sub-array being deactivated by deactivating the reception channel that is associated therewith.

**8.** Device according to any one of Claims 2 to 7, **char-**

**acterized in that**, the antenna array consisting of radiating elements (2) that are associated with active modules, the active modules of several sub-arrays of said antenna are able to be deactivated receptionwise in order to allow an interferometry base to be created for measuring the directions of arrival of signals in the RESM reception function, a sub-array being deactivated by deactivating the reception channel that is associated therewith.

9. Device according to either one of Claims 7 or 8, **characterized in that** the radiating elements (2) of the sub-arrays associated with the modules remaining active are grouped in columns (71, 72, 73, 74) and/or in rows.

10. Device according to any one of Claims 2 to 9, **characterized in that**, in each reception channel associated with a sub-array of said antenna, it includes at least:

 - in the analogue domain, a low-noise amplifier (58), a filter (50) adapted to said given frequency band, and an analogue-digital converter (43);
 - in the digital domain, a digital filter (51) adapted to the instantaneous frequency band of the reception function and a digital filter (52) covering the available remainder of said given frequency band, the input signals of said digital filters arising from the output of said analogue-digital converter.

11. Device according to Claim 10, **characterized in that** it includes, for each reception channel, circuits (45, 48, 49) for transposing the frequency of the received signals upstream of the analogue converting circuit.

12. Device according to either one of Claims 10 or 11, **characterized in that** each analogue reception channel is integrated into a module (20) furthermore including an emission channel that is also associated with said sub-array.

13. Device according to any one of Claims 10 to 12, **characterized in that** said digital filters (51, 52) are implemented via the processing means of said radar.

14. Device according to any one of the preceding claims, **characterized in that** the radar reception function and the RESM reception function are able to be performed simultaneously.

15. Radar, **characterized in that** it includes a receiving device according to any one of the preceding claims.

M lignes

2

M colonnes

# FIG.1

1

21

22

HPA

25

26

24

23

LNA

20

# FIG.2

2

R1  R2  R3  R4

2

31

R5  R6  R7  R8

## FIG.3

71  R1  R2  72  R3  73  R4  74

71  R5  72  R6  73  R7  R8  74  1

## FIG.7

FIG.4

**FIG.5**

FIG.6

## RÉFÉRENCES CITÉES DANS LA DESCRIPTION

**Documents brevets cités dans la description**

- FR 2988858 A1